(19) Europäisches Patentamt
European Patent Office
Office européen des brevets

(11) Veröffentlichungsnummer: **0 033 754**
**B1**

(12) **EUROPÄISCHE PATENTSCHRIFT**

(45) Veröffentlichungstag der Patentschrift: **08.02.84**

(51) Int. Cl.³: **C 08 J 7/12, G 02 C 7/04**

(21) Anmeldenummer: **80101765.8**

(22) Anmeldetag: **02.04.80**

(54) **Verfahren zur Hydrophilierung von Kontaktlinsen aus Siliconkautschuk.**

(30) Priorität: **08.02.80 DE 3004685**

(43) Veröffentlichungstag der Anmeldung: **19.08.81 Patentblatt 81/33**

(45) Bekanntmachung des Hinweises auf die Patenterteilung: **08.02.84 Patentblatt 84/6**

(84) Benannte Vertragsstaaten: **FR GB IT NL**

(56) Entgegenhaltungen:
**DD - A - 137 238**
**DE - A - 2 360 400**
**FR - A - 1 526 934**

(73) Patentinhaber: **Titmus Eurocon Kontaktlinsen GmbH & Co. KG**
**Goldbacher Strasse 57**
**D-8750 Aschaffenburg (DE)**

(72) Erfinder: **Kossmehl, Gerhard, Dr.**
**Grabenstrasse 38 F**
**D-1000 Berlin 45 (DE)**
Erfinder: **Quast, Dietrich**
**Pichelsdorferstrasse 15**
**D-1000 Berlin 20 (DE)**
Erfinder: **Schäfer, Horst, Dr.**
**Beethovenstrasse 27**
**D-8750 Aschaffenburg (DE)**

(74) Vertreter: **Grams, Klaus Dieter, Dipl.-Ing. et al,**
**Patentanwälte Jaeger, Grams & Pontani**
**Kreuzweg 34**
**D-8031 Stockdorf (DE)**

**EP 0 033 754 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Hydrophilierung von Kontaktlinsen aus Siliconkautschuk

Die Erfindung bezieht sich auf ein Verfahren zur Hydrophilierung von Kontaktlinsen aus Siliconkautschuk, bei dem die Siliconkautschukoberfläche mit einer hydrophilen Oberflächenschicht versehen wird.

Es ist bekannt, Kontaktlinsen aus hydrophobem Siliconkautschuk dadurch hydrophil zu machen, daß hydrophile Monomere auf die Siliconkautschukoberfläche aufgepfropft werden. Dabei wird zuvor in Gegenwart von Sauerstoff ionisierender oder nicht-ionisierender Strahlung ausgesetzter Siliconkautschuk mit einem ungesättigten Monomer in Berührung gebracht, beispielsweise mit N-Vinylpyrrolidon oder Hydroxyethylmethacrylat (FR—A—15 26 934, DD—A—137 238), wobei es auch bekannt ist (DE—A—23 60 400), die Bestrahlung durchzuführen, während das Monomer und der Siliconkautschuk in Berührung miteinander stehen. Diese bekannten Verfahren haben jedoch den Nachteil, daß die dadurch erzeugte hydrophile Oberflächenschicht die Sauerstoffdurchlässigkeit der Kontaktlinsen verringert und daß die hydrophilierte Kontaktlinse durch Ablagerungen verschiedenster Stoffe zur Eintrübung und Verunreinigung neigt.

Der Erfindung liegt die Aufgabe zugrunde, ein Verfahren zur Hydrophilierung von Kontaktlinsen aus Siliconkautschuk zu schaffen, durch das die Sauerstoffdurchlässigkeit der Kontaktlinse nicht verringert wird und trotz hoher Hydrophilie keine erhöhte Neigung zu Ablagerungen entsteht.

Diese Aufgabe wird erfindungsgemäß dadurch gelöst, daß in einem ersten Verfahrensschritt an der Oberfläche der Kontaktlinsen der Siliconkautschuk mit einem oligomeren, SiH-Gruppen enthaltenden Siloxan in Gegenwart eines Katalysators umgesetzt wird (Äquilibrierungsreaktion) und daß in einem zweiten Verfahrensschritt der äquilibrierte Siliconkautschuk entweder einer Reaktion mit einer wässrigen Base oder einer Silan-Additionsreaktion mit C=C-Doppelbindungen unterworfen wird, durchgeführt mit Verbindungen, die C=C-Doppelbindungen enthalten und bei denen die Additionsreaktion entweder unmittelbar zu hydrophilen Gruppierungen an der Oberfläche der Kontaktlinsen oder zunächst zu hydrophoben Gruppierungen an der Oberfläche der Kontaktlinsen führen, die durch Umesterung, Etherspaltung oder Esterspaltung hydrophil gemacht werden.

Die erfindungsgemäße Hydrophilierung erfolgt somit in der Weise, daß in einem ersten Verfahrensschritt zunächst durch eine chemische Umsetzung reaktive Gruppen in die Oberfläche des Siliconkautschuks gebracht werden, die dann in einem zweiten Verfahrensschritt bei der Reaktion mit mannigfaltigen Substanzen eine Veränderung der molekularen Oberflächenstruktur bewirken, so daß aufgrund der veränderten Oberflächenbeschaffenheit die Hydrophobie des Siliconkautschuks an dessen Oberfläche beseitigt wird. Die dabei eingesetzten Verbindungen werden mit dem Siliconkautschuk dauerhaft durch normale chemische Bindungen, d.h. durch Hauptvalenzbindungen, fest verknüpft, so daß sie zu Bausteinen in dem modifizierten vernetzten Siliconmaterial werden.

Ein wesentlicher Vorteil des erfindungs-gemäßen Verfahrens besteht darin, daß durch die erfindungsgemäße Hydrophilierung die Sauerstoffdurchlässigkeit des Siliconkautschuks praktisch nicht herabgesetzt wird, da die aufgebrachte hydrophil machende Schicht äußerst dünn ist, weil viele, relativ kurze hydrophile Molekülketten an die Siliconkautschukoberfläche geknüpft werden.

Das erfindungsgemäße Verfahren ist sowohl bei warmvernetzten Siliconkautschuktypen als auch bei kaltvernetzten Siliconkautschuktypen anwendbar. Warmvernetzte Siliconkautschuktypen besitzen keine reaktionsfähigen Gruppen, über die durch chemische Bindungen fest verknüpfte Moleküle an die Oberfläche gebunden werden könnten, um den hydrophoben Siliconkautschuk hydrophil zu machen. Kaltvernetzte Siliconkautschuktypen weisen dagegen auch in der Oberfläche noch geringe Konzentrationen von reaktionsfähigen Gruppen in Form von SiH-Gruppen auf, die mit hydrophilen Molekülen umgesetzt werden können, um den hydrophoben Siliconkautschuk an der Oberfläche zu hydrophilieren. Im Falle der Anwendung des erfindungsgemäßen Verfahrens auf warmvernetzte Siliconkautschuktypen werden im ersten Verfahrensschritt reaktionsfähige Gruppen eingeführt, während bei Anwendung des erfindungsgemäßen Verfahrens auf kaltvernetzte Siliconkautschuktypen die Menge der reaktionsfähigen Gruppen erhöht wird.

Im ersten Verfahrensschritt wird der Siliconkautschuk mit einem niedermolekularen, SiH-Gruppen enthaltenden Siloxan in Gegenwart eines geeigneten Katalysators in einem Lösungsmittel, das für den vernetzten Siliconkautschuk ein schwaches Quellungsmittel ist, umgesetzt, um auf diese Weise SiH-Gruppen in die Oberfläche des Siliconkautschuks einzuführen. Diese Reaktion wird als Äquilibrierungsreaktion bezeichnet. Für den Fall von Polydimethylsiloxan als Siliconkautschuk verläuft die Äquilibrierungsreaktion wie folgt:

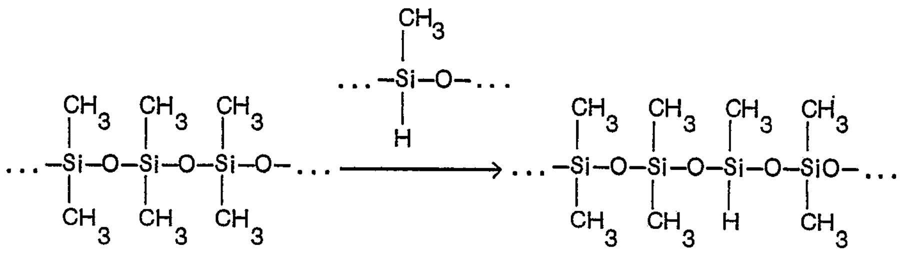

Die für diese Umsetzung geeignete Siliconkautschuk kann sowohl ein beispielsweise durch Peroxide warmvernetztes Polydimethylsiloxan als auch ein durch Silan-Vinyl-Gruppen-Reaktion bei Raumtemperatur kaltvernetztes Polydimethylsiloxan sein, das auch in geringer Menge Phenyl-Gruppen statt Methyl-Gruppen besitzen kann.

Als Reagenz zur Einführung der SiH-Gruppen eignen sich oligomere lineare Methylhydrogensiloxane mit 5 bis 50 Si-Atomen in der Kette, wobei von diesen das 10 Si-Atome enthaltende Methylhydrogensiloxan, beispielsweise das unter der Bezeichnung "Baysilon-Öl MH4" vertriebene Öl ("Baysilon" ist Warenzeichen der Firma Bayer AG, Leverkusen, Deutschland), am geeignetsten ist.

Beispiel 1
(erster Verfahrensschritt):

Siliconkautschuklinsen aus warmvernetztem oder kaltvernetztem Siliconkautschuk werden 24 Stunden bei 80°C in einer 30Gew.-%igen Lösung von oligomerem Methylhydrogensiloxan mit 10 Si-Atomen ("Baysilon-Öl MH4") in Diethylenglykoldimethylether als Lösungsmittel mit 0,5 Gew.-% Hexachlorcyclotriphosphazen als Katalysator gerührt und danach mit dem gleichen Lösungsmittel extrahiert.

Zur Einführung der SiH-Gruppen eignen sich ferner auch oligomere cyclische Methylhydrogensiloxane mit 3 bis etwa 11 Si-Atomen. Am günstigsten sind hier die ca. 7 bis 10 Si-Atome im Ring enthaltenden Verbindungen, die auch als Gemisch eingesetzt werden können. Beispielsweise werden die einzelnen cyclischen Verbindungen im Gemisch bei der Hydrolyse von Methyldichlorsilan erhalten und fraktioniert.

Beispiel 2
(erster Verfahrensschritt):

Siliconkautschukkontaktlinsen aus warmvernetztem oder kaltvernetztem Siliconkautschuk werden 24 Stunden bei 80°C in einer 10 Gew.-%igen Lösung eines Gemisches von cyclischen Methylhydrogensiloxanen mit ca. 7 bis 10 Si-Atomen (Siedepunkt bei 12 Torr = 100 bis 200°C) in Diethylenglykoldimethylether als Lösungsmittel mit 1,5 Gew.-% Hexachlor-cyclotriphosphazen als Katalysator gerührt und danach mit dem gleichen Lösungsmittel extrahiert.

IR-spektrokopische Untersuchungen der Kontaktlinsenoberfläche haben gezeigt, daß die Äquilibrierung mit dem Gemisch der cyclischen Heptameren bis Dekameren wirkungsvoller als die mit den linearen Methylhydrogensiloxanen ist.

Als Lösungsmittel für die Äquilibrierungsreaktion sind inerte Lösungsmittel geeignet, die den Siliconkautschuk nur geringfügig anquellen, wie beispielsweise Diethylenglykoldimethylether. Aromatische Kohlenwasserstoffe wie Toluol sind unbrauchbar.

Zur Durchführung der Äquilibrierungsreaktion ist ein Katalysator notwendig. Als Katalysator geeignet sind Säuren im eigentlichen Sinne und LEWIS-Säuren. Besonders geeignet wegen ihrer leichten Entfernbarkeit und physiologischen Unbedenklichkeit sind wässrige $H_2SO_4$ höherer Konzentration (beispielsweise 80%ig), säureaktivierte Bleicherde sowie Hexachlorcyclotriphosphazen. Das letztere ist der wirksamste Katalysator und wird in Konzentrationen zu 0,1 bis 4 Gew.-%, bezogen auf die Methylhydrogensiloxanmenge, angewendet.

Das Optimum der Katalysatormenge hängt von der Konzentration des Reagenz der Äquilibrierungsreaktion ab. So ist eine Katalysatorkonzentration von 1,5 bis 2 Gew.-% bei einer Konzentration des Reagenzes von 10 Gew.-% sowie 0,5 Gew.-% in 50 Gew.-%iger Lösung optimal. Bei einer Erhöhung dieser Werte tritt Gelierung ein. Die stärkste Äquilibrierung wurde unter den zuletzt genannten Bedingungen, d.h. bei 50 Gew.-%iger Lösung mit 0,5 Gew.-% Katalysator, erreicht.

Die günstigste Reaktionstemperatur liegt bei 100°C. Während bei Temperaturen unter 100°C die Umsetzung geringer ist, verläuft sie oberhalb 100°C unter Gelierung der Reaktionslösung.

Wie IR-spektroskopische Untersuchungen gezeigt haben, weisen die äquilibrierten Siliconkautschukkontaktlinsen SiH-Gruppen in größerer Menge auf als unbehandelte Siliconkautschukkontaktlinsen aus kalt- oder warmvernetztem Siliconkautschuk.

Durch die Äquilibrierung gemäß dem ersten Verfahrensschritt des erfindungsgemäßen Verfahrens wird die Sauerstoffdurchlässigkeit der Kontaktlinsen nicht verringert. Die Benetzbarkeit liegt etwa in gleicher Größenordnung wie für unbehandelte Kontaktlinsen.

Durch die Äquilibrierung werden in die Oberfläche der Siliconkautschuklinsen SiH-Gruppen eingebracht, die nun eine Vielzahl von chemischen Reaktionen eingehen können, bei denen aus den SiH-Gruppen andere, hydrophile Gruppierungen entstehen, die durch chemische Bindung an das Silicon-Gerüst geknüpft sind. Zu diesem Zweck wird erfindungsgemäß im zweiten Verfahrensschritt entweder eine Reaktion mit einer wässrigen Base oder eine Silan-Additionsreaktion mit Verbindungen, die C=C-Doppelbindungen enthalten, durchgeführt.

Bei der Reaktion mit einer Base werden die SiH-Gruppen beispielsweise durch Alkalimetallhydroxid in wässriger Lösung in Si—OH-Gruppen umgewandelt. Diese Reaktion verläuft mit Natriumhydroxid in wässriger Lösung wie folgt:

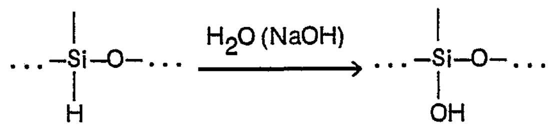


Beispiel 3
(zweiter Verfahrensschritt):

Sowohl nach Beispiel 1 als auch nach Beispiel 2 äquilibrierte Kontaktlinsen aus kaltvernetztem Siliconkautschuk werden bei Raumtemperatur mit 10%iger wässriger $NaOH_2$, die als Lösungsvermittler 0,2 Volumenteile Diethylenglykoldimethylether enthält, 3 bis 12 Stunden gerührt und danach wie üblich gewässert. Die Reaktion zeigt sich jeweils durch $H_2$-Entwicklung an.

Als Lösungsvermittler können auch Butanole eingesetzt werden.

Die abgelaufene Reaktion ist an der Abnahme der SiH-Bande und dem Auftreten der OH-Bande im IR-Spectrum erkennbar. Die Sauerstoffdurchlässigkeit der auf diese Weise hydrophilierten Kontaktlinsen ist nicht vermindert. Die Benetzbarkeit ist jedoch erhöht. Messungen des Randwinkels haben Werte im Bereich vom 37° bis 45° ergeben.

Alternativ zur Reaktion mit Basen kann eine Silan-Additions-reaktion mit Verbindungen, die eine C=C-Doppelbindung aufweisen, durchgeführt werden (Pfropfungsreaktion).

Bei einer ersten Gruppe von Verbindungen, die C=C-Doppelbindungen enthalten, führt die Pfropfungsreaktion unmittelbar zu hydrophilen Gruppierungen an der Oberfläche der Kontaktlinsen. Bei einer zweiten Gruppe von Verbindungen mit C=C-Doppelbindungen im Molekül können nach dem Pfropfen zunächst hydrophobe Reste in größerer Anzahl vorhanden sein, die in vorteilhafter Ausbildung der Erfindung in einem dritten Verfahrensschritt durch Umesterung, Etherspaltung oder Esterspaltung hydrophil gemacht werden.

Im Anschluß an die Äquilibrierungsreaktion wird samit die Hydrophilierung entweder in einem oder zwei Verfahrensschritten erreicht.

Zu der erstgenannten Gruppe von Verbindungen, die für die Silan-Additionsreaktion geeignet sind und unmittelbar zu einer hydrophilen Oberflächenschicht führen, seien als Beispiele genannt: Allylglucose, Allylharnstoff, Methacrylsäure-$\beta$-trimethylsilylhydroxyethylester (dabei erfolgt die Abspaltung der Trimethylsilyl-Gruppe bei der Konditionierung der Kontaktlinsen in physiologischer Kochsalzlösung), $\beta$-Trimethylsilylhydroxyethylmethacrylsäureamid, Methacrylsäure-N-$\beta$-aminoethylamid, Methacrylsäure-2-dimethylaminoethylester, N-Vinylpyrrolidon, N-Vinyl-$\varepsilon$-caprolactam, N-Methyl-N-vinylacetamid sowie Vinylpyridin und lösliche Polymere aller vorstehend genannten Verbindungen.

Zu der zweitgenannten Gruppe der Verbindungen, die für die Silan-Additionsreaktion geeignet sind und zur Hydrophilierung den dritten Verfahrensschritt erfordern, seien genannt: Allylglycidylether, Methacrylsäureglycidylester, Acrylsäurealkylester, Methacrylsäurealkylester, Vinylessigsäurealkylester, Allylessigsäurealkylester, Allylmalonsäuredialkylester, Allylacetat sowie Vinylacetat und lösliche Polymere der vorstehend genannten Monomeren.

Bei allen diesen Umsetzungen, die entweder ohne oder mit Umesterung, Etherspaltung bzw. Esterspaltung als drittem Verfahrensschritt verlaufen, wird eine gute Benetzbarkeit erreicht, wie sie für Hydrogel-Materialien typisch ist.

Von den Verbindungen der zweitgenannten Gruppe kann bei Methacrylsäureglycidylester das Oxiransystem im dritten Verfahrensschritt beispielsweise mit Triethylenglykol oder mit anderen höhermolekularen Ethylenglykolen umgesetzt werden (Etherspaltung). Bei Allylacetat, Vinylacetat und deren löslichen Polymeren wird im dritten Verfahrensschritt eine Esterspaltung durchgeführt.

Die vorstehend genannten Alkylester sowie deren lösliche Polymere werden vorzugsweise mit Hilfe von Triethylenglykol sowie höhermolekularen Ethylenglykolen umgeestert.

Die Silan-Additionsreaktion, d.h. Pfropfungsreaktion, verläuft mit Methacrylsäuremethylester wie folgt:

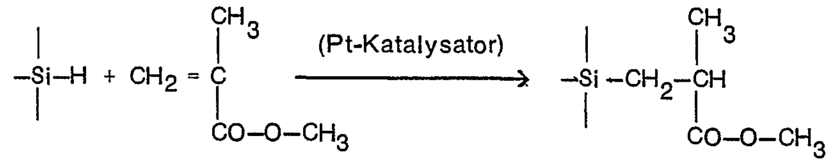


Mit löslichem, C=C-Doppelbindungen enthaltendem Polymethylmethacrylat (PMMA), verläuft die Pfropfungsreaktion analog.

Beispiel 4
(zweiter Verfahrensschritt):

Kontaktlinsen aus äquilibriertem, kaltvernetztem Siliconkautschuk werden 3 Tage lang bei 82°C mit einer 1 Gew.-%igen Lösung von löslichem PMMA, wie es beispielsweise unter der Bezeichnung "Plexit 74" vertrieben wird ("Plexit" ist Warenzeichen der Firma Röhm & Haas, Deutschland), in Ethylenglykoldimethylether in Gegenwart von $10^{-7}$ bis $10^{-5}$ mol $H_2PtCl_6 \cdot 6H_2O$ pro Mol PMMA als Katalysator gerührt und danach wie üblich gewässert.

Weitere Versuche zur Optimierung ergaben, daß wesentlich kürzere Reaktionszeiten als die in Beispiel 4 genannten 3 Tage möglich sind. Ferner wurden Versuche für 0,1 bis 10 Gew.-%ige Lösungen des PMMA durchgeführt; dabei zeigte sich, daß PMMA-Konzentrationen über 1 Gew.-% Trübungen der Kontaktlinse zur Folge haben können und daher nicht geeignete sind. Bei einer Katalysatorkonzentration von über $10^{-5}$ mol pro Mol PMMA tritt eine Platinabscheidung auf, und es werden getönte Kontaktlinsen erhalten. Wie IR-spektroskopische Untersuchungen gezeigt haben, scheidet sich bei der Behandlung mit löslichem PMMA ohne Katalysator unlösliches PMMA ohne chemische Bindung auf der Siliconkautschukoberfläche ab. Die Ver-wendung eines Katalysators ist daher vorzuziehen.

Bei den zunächst äquilibrierten kaltvernetzten Siliconkautschuktypen wird nach der katalysierten Umsetzung mit löslichem PMMA eine deutliche Abnahme der SiH-Bande bei einer kräftigen Zunahme der C=O-Bande, die charakteristisch für Methacrylat ist, im IR-Spektrum beobachtet.

Durch die PMMA-Aufpfropfung wird die Sauerstoffdurchlässigkeit praktisch nicht herabgesetzt und Benetzbarkeit im Vergleich zu unbehandelten Siliconkautschuklinsen verbessert. Es wurden Randwinkel kleiner als 45° gemessen. Bei der unbehandelten Siliconkaut-schukkontaktlinse beträgt der Randwinkel 90°, und bei PMMA beträgt der Randwinkel 52°.

Die mit PMMA gepfropften Siliconkautschukkontaktlinsen können im dritten Verfahrensschritt umgeestert werden, um die Methyl-Reste durch hydrophilere Reste zu ersetzen. Dies erfolgt vorzugsweise mit Triethylenglykol oder höhermolekularen Ethylenglykolen durch mehrstündiges Rühren bei Raumtemperatur bis 60°C in Gegenwart eines basischen Katalysators wie beispiels weise K-tert-Butanolat. Die Reaktion verläuft dabei wie folgt:

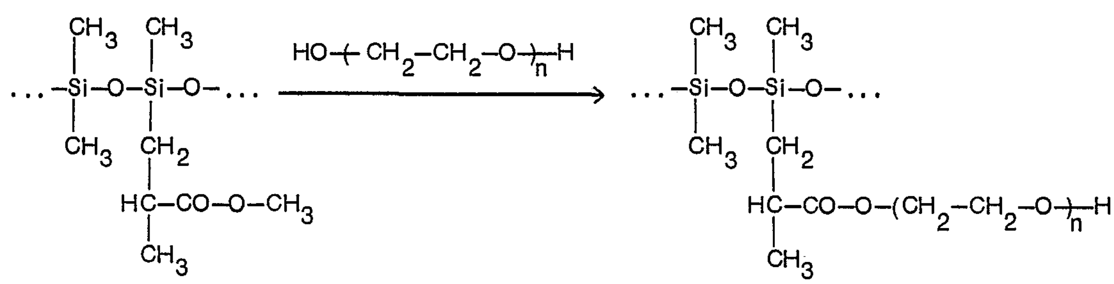


Beispiel 5
(dritter Verfahrensschritt):

Die unter Beispiel 4 beschriebenen Kontaktlinsen werden bei 60°C mit einer 5 Gew.-%igen Lösung an K-tert-Butanolat als Katalysator in Triethylenglykol gerührt und danach wie üblich gewässert.

Bei der Umesterung mit Ethylenglykolen wird der hydrophobe Methyl-Rest durch hydrophile Ethylenglykol-Reste ersetzt, was zu einer deutlich besseren Benetzbarkeit und somit höherer Hydrophilie führte. Es wurden Randwinkel zwischen 10° und 20° gemessen. Die Sauerstoffdurchlässigkeit der so behandelten Kontaktlinsen weist praktisch die gleichen Werte auf wie für unbehandelte Siliconkautschukkontaktlinsen.

Die erfindungsgemäß hydrophilierten Kontaktlinsen können in an sich bekannter Weise einer Plasmabehandlung unterworfen werden.

## Patentansprüche

1. Verfahren zur Hydrophilierung von Kontaktlinsen aus Siliconkautschuk, bei dem die Siliconkautschukoberfläche mit einer hydrophilen Oberflächenschicht versehen wird, dadurch gekennzeichnet, daß in einem ersten Verfahrensschritt an der Oberfläche der Kontaktlinsen der Siliconkautschuk mit einem oligomeren, SiH-Gruppen enthaltenden Siloxan in Gegenwart eines Katalysators umgesetzt wird (Äquilibrier-ungsreaktion) und daß in einem zweiten Verfahrensschritt der äquilibrierte Siliconkautschuk entweder einer Reaktion mit einer wässrigen Base oder einer Silan-Additionsreaktion mit C=C-Doppelbindungen unterworfen wird, durchgeführt mit Verbindungen, die C=C-Doppelbindungen enthalten und bei denen die Additionsreaktion entweder unmittelbar zu hydrophilen Gruppierungen an der Oberfläche der Kontaktlinsen oder zunächst zu hydrophoben Gruppierungen an der Oberfläche der Kontaktlinsen führen, die durch Umesterung, Etherspaltung oder Esterspaltung hydrophil gemacht werden.

2. Verfahren nach Anspruch 1, dadurch gekennzeichnet, daß das Reagenz im ersten Verfahrensschritt oligomeres lineares Methylhydrogensiloxan mit 5 bis 50, vorzugsweise 8 bis 12, insbesondere 10, Si-Atomen in der Kette oder ein Gemisch solcher Methylhydrogensiloxane ist.

3. Verfahren nach Anspruch 1, dadurch gekennzeichnet, daß das Reagenz im ersten Verfahrensschritt oligomeres cyclisches Methylhydrogensiloxan mit 3 bis 11, vorzugsweise 6 bis 10, insbesondere 7 bis 10, Si-Atomen im Ring oder ein Gemisch solcher Methylhydrogensiloxane ist.

4. Verfahren nach einem der Ansprüche 1 bis 3, dadurch gekennzeichnet, daß als Katalysator im ersten Verfahrensschritt Säuren oder LEWIS-Säuren dienen.

5. Verfahren nach Anspruch 5, dadurch gekennzeichnet, daß als Katalysator Hexachlorcyclotriphosphazen dient.

6. Verfahren nach einem der Ansprüche 1 bis 5, dadurch gekennzeichnet, daß die C=C-Doppelbindungen enthaltenden Verbindungen im zweiten Verfahrensschritt mehrere oder eine der folgenden Verbindungen sind bzw. ist: Allylglucose, Allylharnstoff, Methylacrylsäure-$\beta$-trimethylsilylhydroxyethylester, $\beta$-Trimethylsilylhydroxyethylmethacrylsäureamid, Methacrylsäure-N-$\beta$-aminoethyl-amid, Methacrylsäure-2-dimethylaminoethylester, N-Vinylpyrrolidon, N-Vinyl-$\varepsilon$-caprolactam, N-Methyl-N-vinylacetamid, Vinylpyridin und lösliche Polymere aller vorstehend genannten Verbindungen.

7. Verfahren nach Anspruch 1—5, dadurch gekennzeichnet, daß die C=C-Doppelbindungen enthaltenden Verbindungen im zweiten Verfahrensschritt mehrere oder eine der folgenden Verbindungen sind bzw. ist: Acrylsäurealkylester, Methacrylsäurealkylester, Vinylessigsäurealkylester, Allylessigsäurealkylester, Allylmalonsäuredialkylester sowie lösliche Polymere der vorstehend genannten Monomeren, wobei nachfolgend eine Umesterung mit Triethylenglykol oder höhermolekularen Ethylenglykolen erfolgt.

8. Verfahren nach Anspruch 1—5, dadurch gekennzeichnet, daß die C=C-Doppelbindungen enthaltenden Verbindungen im zweiten Ver-fahrensschritt mehrere oder eine der folgenden Verbindungen sind bzw. ist: Methacrylsäureglycidylester, Allylglycidylether sowie lösliche Polymere der vorstehend genannten Monomeren, wobei nachfolgend eine Etherspaltung vorgenommen wird.

9. Verfahren nach Anspruch 1—5, dadurch gekennzeichnet, daß die C=C-Doppelbindungen enthaltenden Verbindungen im zweiten Verfahrensschritt mehrere oder eine der folgenden Verbindungen sind bzw. ist: Allylacetat, Vinylacetat sowie lösliche Polymere der vorstehend genannten Monomeren, wobei nachfolgend eine Esterspaltung vorgenommen wird.

## Revendications

1. Procédé pour rendre hydrophiles des lentilles de contact en caoutchouc de silicone, dans lequel on munit la surface de caoutchouc de silicone d'une couche superficielle hydrophile, caractérisé en ce que l'on fait réagir, dans une première phase opératoire, à la surface des lentilles de contact, le caoutchouc de silicone avec un siloxane oligomère contenant des groupes SiH en présence d'un catalyseur (réaction d'équilibrage) et en ce que, dans une seconde phase opératoire, on soumet le caoutchouc de silicone équilibré soit à une réaction avec une base aqueuse, soit à une réaction d'addition de silane avec des doubles liaisons C=C, réalisée avec des composés qui renferment des doubles liaisons C=C et avec lesquels la réaction d'addition donne soit directement des groupements hydrophiles à la surface des lentilles de contact, soit en premier lieu des groupements hydrophobes sur la surface des lentilles de contact, groupements hydrophobes qu'on rend hydrophiles par transestérification, coupure sur l'éther ou coupure sur l'ester.

2. Procédé selon la revendication 1, caractérisé en ce que le réactif dans la première phase opératoire est un méthylhydrogénosiloxane oligomère linéaire dont la chaîne comprend 5 à 50 atomes de Si, et de préférence 8 à 12 et en particulier 10 atomes de Si, ou un mélange de tels méthylhydrogénosiloxanes.

3. Procédé selon la revendication 1, caractérisé en ce que le réactif dans la première phase opératoire est un méthylhydrogénosiloxane oligomère cyclique comprenant dans son cycle 3 à 11 atomes de Si, et de préférence 6 à 10 et en particulier 7 à 10 atomes de Si, ou un mélange de tels méthylhydrogénosiloxanes.

4. Procédé selon l'une quelconque des revendications 1 à 3, caractérisé en ce que des acides ou des acides de LEWIS servent de catalyseur durant la première phase opératoire.

5. Procédé selon la revendication 4, caractérisé en ce que de l'hexachlorocyclotriphosphazène sert de catalyseur.

6. Procédé selon l'une quelconque des revendications 1 à 5, caractérisé en ce que les composés renfermant des doubles liaisons C=C dans la seconde phase opératoire sont ou est l'un ou plusieurs des composés suivants: ε allylurée, ester-β-triméthylsilylhydroxyléthylique de l'acide méthacrylique, amide de l'acide-β-triméthylsilylhydroxyéthyl méthacrylique, amide-N-β-aminoéthylique de l'acide méthacrylique, ester-2-diméthylaminoéthylique de l'acide méthacrylique, N-vinylpyrrolidone, N-vinyl-ε-caprolactame, N-méthyl-N-vinylacétamide, vinylpyrridine et les polymères solubles de tous les composés ci-dessus mentionnés.

7. Procédé selon l'une quelconque des revendications 1 à 5, caractérisé en ce que dans la seconde phase opératoire les composés renfermant des doubles liaisons C=C sont ou est l'un ou plusieurs des suivants: ester alkylique de l'acide acrylique, ester alkylique de l'acide méthacrylique, ester alkylique de l'acide vinylacétique, ester alkylique de l'acide allylacétique, ester dialkylique de l'acide allylmalonique, ainsi que les polymères solubles des monomères cités ci-dessus, tandis qu'ensuite on réalise une transestérification avec du triéthylèneglycol ou des éthylèneglycols de masse moléculaire élevée.

8. Procédé suivant l'une quelconque des revendications 1 à 5, caractérisé en ce que dans la seconde phase opératoire les composés renfermant des doubles liaisons C=C sont ou est l'un ou plusieurs des composés suivants: étherglycidylique de l'acide méthacrylique, éther d'allyle et de glycidyle, ainsi que les polymères solubles des monomères sus-mentionnés, tandis qu'ensuite on effectue une coupure sur l'éther.

9. Procédé selon l'une quelconque des revendications 1 à 5, caractérisé en ce que dans la seconde phase opératoire les composés renfermant des doubles liaisons C=C sont ou est l'un ou plusieurs des composés suivants: acétate d'allyle, acétate de vinyle, ainsi que les polymères solubles des monomères sus-mentionnés, tandis qu'ensuite on effectue une coupure sur l'ester.

**Claims**

1. A process for hydrophiling contact lenses of silicone rubber which process comprises providing the silicone rubber surface with a hydrophilic surface layer, characterized in that in a first process step on the surface of the contact lenses the silicone rubber is reacted in the presence of a catalyst with an oligomeric siloxane containing SiH groups (equilibration reaction) and that in a second process step the equilibrated silicone rubber is subjected to either a reaction with an aqueous base or a silane addition reaction with C=C double bonds, the addition reaction being carried out with compounds which contain C=C double bonds and with which the addition reaction results either immediately in hydrophilic groupings on the surface of the contact lenses or at first in hydrophobic groupings on the surface of the contact lenses, said hydrophobic groupings being rendered hydrophilic by transesterification, ether cleavage or ester cleavage.

2. A process according to claim 1, characterized in that the reagent in the first process step is oligomeric linear methyl hydrogen siloxane having from 5 to 50, preferably from 8 to 12, especially 10, Si atoms in its chain, or a mixture of such methyl hydrogen siloxanes.

3. A process according to claim 1, characterized in that the reagent in the first process step is oligomeric cyclic methyl hydrogen siloxane having from 3 to 11, preferably from 6 to 10, especially from 7 to 10, Si atoms in its ring, or a mixture of such methyl hydrogen siloxanes.

4. A process according to any one of claims 1 to 3, characterized in that acids or Lewis acids serve as catalysts in the first process step.

5. A process according to claim 4, characterized in that hexachlorocyclotriphosphazene serves as catalyst.

6. A process according to any one of claims 1 to 5, characterized in that the compounds which contain C=C double bonds in the second process step consist of one or more of the following compounds: allylglucose, allylurea, β-trimethylsilylhydroxyethyl methacrylate, β-trimethylsilylhydroxy-ethylmethacrylamide, N-β-aminoethylmethacrylamide, 2-dimethylaminoethyl methacrylate, N-vinyl-pyrrolidone, N-vinyl-ε-caprolactam, N-methyl-N-vinylacetamide, vinylpyridine and soluble polymers of any above-mentioned compound.

7. A process according to any one of claims 1 to 5, characterized in that the compounds which contain C=C double bonds in the second process step consist of one or more of the following compounds: alkyl acrylate, alkyl methacrylate, alkyl vinylacetate, alkyl allylacetate, dialkyl allyl-malonate as well as soluble polymers of the above-mentioned monomers, a transesterification with triethylene glycol or higher molecular ethylene glycols taking place subsequently.

8. A process according to any one of claims 1 to 5, characterized in that the compounds which contain C=C double bonds in the second process step consist of one or more of the following compounds: glycidyl methacrylate, allyl glycidyl ether as well as soluble polymers of the above-mentioned monomers, an ether cleavage being effected subsequently.

9. A process according to any one of claims 1 to 5, characterized in that the compounds which contain C=C double bonds in the second process step consist of one or more of the following compounds: allyl acetate, vinyl acetate as well as soluble polymers of the above-mentioned monomers, an ester cleavage being effected subsequently.